# EUROPÄISCHE PATENTANMELDUNG

(11) **EP 1 666 324 A1**
(43) Veröffentlichungstag der Anmeldung: **07.06.2006**
(21) Anmeldenummer: 05109514.9
(22) Anmeldetag: 13.10.2005
(51) Int. Cl.: B60T 8/48, B60T 8/40

(54) **Schlupfgeregelte elektrohydraulische Fahrzeugbremsanlage**

(30) Priorität: 06.12.2004 DE 102004058660
(71) Anmelder: ROBERT BOSCH GMBH, 70442 Stuttgart (DE)
(72) Erfinder: Krueger, Frank, 01848, Hohnstein (DE)

(57) **Zusammenfassung**

Die Erfindung geht aus von einer schlupfgeregelten elektrohydraulischen Fahrzeugbremsanlage (10, 10', 10") mit einer Hydraulikeinheit (21) an die ein Hauptbremszylinder (12) und die Radbremsen (24, 26) eines Fahrzeugs angeschlossen sind. Die Hydraulikeinheit (21) umfasst zur Regelung des Bremsdrucks in den Radbremsen (24, 26) Elektromagnetventile (28 - 38) und eine Pumpeneinheit (40, 40', 40"), die von einem extern ansteuerbaren Antriebsmotor (42, 42', 42") angetrieben ist.

Erfindungsgemäß ist ferner eine Druckspeichereinheit (70, 70', 70") vorhanden, die wenigstens einen Druckspeicher (72, 72', 72") und wenigstens ein ansteuerbares Speichersteuerventil (74, 74a',74b'; 74a", 74b", 74c") aufweist. Die Druckspeichereinheit (70, 70', 70") ist mit der Hochdruckseite der Pumpeneinheit (40, 40', 40") und mit zumindest einer der Radbremsen (24, 26) eines Fahrzeugs verbunden.

Durch elektronische Ansteuerung der Speichersteuerventile (74, 74', 74") kann in wenigstens einer der Radbremsen (24, 26) Bremsdruck bis zu einem niedrigen Druckniveau aufgebaut und damit die Dynamik der Fahrzeugbremsanlage (10, 10', 10'') verbessert werden. Zudem verbessert sich die Druckstellgenauigkeit und die Druckbereitstellung für Bremsfunktionen im Niederdruckbereich und erlaubt damit die Darstellung bislang schwer realisierbarer Bremsenfunktionen.

## Beschreibung

### Stand der Technik

Die Erfindung geht aus von einer schlupfgeregelten elektrohydraulischen Fahrzeugbremsanlage entsprechend den gattungsbildenden Merkmalen des Anspruchs 1.

Bei schlupfgeregelten elektrohydraulischen Fahrzeugbremsanlagen ist zu unterscheiden zwischen Fahrzeugbremsanlagen, bei denen während eines Betriebsbremsvorgangs der Bremsdruck vom Fahrer durch Muskelkraft bereitgestellt wird und Fahrzeugbremsanlagen, bei denen dieser Bremsdruck durch Fremdkraft, also durch einen extern angetriebenen Druckerzeuger, erzeugt wird. Bei derartigen Fahrzeugbremsanlagen dient ein Hauptbremszylinder lediglich als Sollwertgeber für den Bremswunsch des Fahrers. Die Erfindung ist auf beide Arten von Bremsanlagen gleichermaßen anwendbar.

Aus der DE 197 01 070 A1 ist eine schlupfgeregelte elektrohydraulische Fahrzeugbremsanlage letztgenannter Bauart bekannt. Diese Fahrzeugbremsanlage weist einen muskelkraftbetätigbaren Hauptbremszylinder auf, der mit einem Hydraulikaggregat gekoppelt ist. An das Hydraulikaggregat sind die Radbremsen des Fahrzeugs angeschlossen. Das Hydraulikaggregat nimmt elektromagnetisch ansteuerbare Ventile und eine extern antreibbare Pumpeneinheit in einem kompakten Gehäuseblock auf. Ein Umschaltventil steuert eine Druckmittelverbindung vom Hauptbremszylinder zu wenigstens einer der angeschlossenen Radbremsen und schaltet darüber die Fahrzeugbremsanlage vom Betriebsbremsbetrieb in den Hilfsbremsbetrieb um. Eine Ventilanordnung aus Druckaufbauventilen und Druckabsenkventilen dient zusammen mit dem ansteuerbaren Antrieb der Pumpeneinheit zur Modulation des Bremsdrucks an den einzelnen Radbremsen. Ein zusätzliches Ansaugventil regelt bedarfsweise eine Druckmittelverbindung vom Hauptbremszylinder zur Saugseite der Pumpeneinheit. Die Ansteuerung der Ventile und des Pumpenantriebs erfolgt durch ein elektronisches Steuergerät. Dieses erfasst mittels Sensoren die Schlupfverhältnisse an den einzelnen Rädern des Fahrzeugs und verarbeitet diese Signale zu Ansteuersignalen weiter. Ziel dabei ist es, auftretenden Radschlupf zu vermeiden, um instabilen Fahrzuständen des Fahrzeugs entgegen zu wirken.

Eine Fahrzeugbremsanlage, bei der im Falle einer Betriebsbremsung der Bremsdruck durch Muskelkraft des Fahrers erzeugt wird, zeigt Dokument DE 41 22 643 A1. Auch diese Fahrzeugbremsanlage weist einen vom Fahrer betätigbaren Hauptbremszylinder, ein damit gekoppeltes Hydraulikaggregat und an dieses Hydraulikaggregat angeschlossene Radbremsen auf. Zur Modulation des Bremsdrucks ist am Hydraulikaggregat eine Ventilanordnung und eine extern angetriebene Pumpeneinheit vorhanden. Diese Pumpeneinheit saugt Druckmittel aus den Radbremsen ab, um den Bremsdruck zwecks Vermeidung eines auftretenden Radschlupfs zu regulieren. Ein Trennventil sperrt gegebenenfalls den Hauptbremszylinder von den Radbremsen ab, um im Falle einer notwendigen Antriebsschlupfregelung oder einer Fahrstabilitätsregelung die betroffenen Radbremsen unabhängig von einer Betätigung des Hauptbremszylinders durch Ansteuerung der Pumpeneinheit mit Bremsdruck versorgen zu können.

Die fortschreitende Entwicklung auf dem Gebiet schlupfgeregelter elektrohydraulischer Fahrzeugbremsanlagen erhöht die Anforderungen an das System bezüglich der Dynamik eines Bremsdruckaufbaus. Mit den derzeit am Markt erhältlichen Systemen lassen sich diese Dynamikanforderungen aufgrund der Trägheit der Pumpeneinheiten beim Anlaufen nicht unter allen Umständen erfüllen. Insbesondere bei niedrigen Umgebungstemperaturen und entsprechend hochviskosem Druckmittel ist die bislang erreichbare Druckaufbaudynamik steigerungsbedürftig. Gleichfalls bedingen Zusatzfunktionen einer modernen Fahrzeugbremsanlage, wie beispielsweise eine hydraulische Bremskraftverstärkung oder ein automatisches, d.h. vom Fahrer unabhängiges Trockenbremsen der rotierenden Bremskörper einer Radbremse bei Umgebungsfeuchtigkeit höhere Anforderungen an die Stellgenauigkeit des Drucks im Niederdruckbereich, damit die dabei automatisch ablaufenden Bremsvorgänge von den Fahrzeuginsassen nicht störend wahrgenommen werden.

Vorteile der Erfindung

Gegenüber dem aufgezeigten Stand der Technik weist eine schlupfgeregelte elektronische Fahrzeugbremsanlage entsprechenden Merkmalen des Anspruchs 1 den Vorteil einer deutlich verbesserten Dynamik im Falle eines voll aktiven Druckaufbaus auf. Eine Betätigung der Radbremsen erfolgt durch die Erfmdung nahezu zeitgleich mit der elektronischen Ansteuerung der Druckspeichereinheit und damit deutlich schneller als bei einer Beaufschlagung der Radbremsen über die Pumpeneinheit. Unter einem voll aktiven Druckaufbau wird im Folgenden ein Betriebszustand verstanden, bei dem ein Druckaufbau vollkommen ohne die Mitwirkung des Fahrers stattfmdet, wohingegen bei einem teilaktiven Druckaufbau ein vom Fahrer aufgebrachter Bremsdruck verändert/verstärkt wird. Ein vollaktiver Druckaufbau fmdet beispielsweise während eines Antriebsschlupfregelbetriebs oder eines Fahrdynamikregelbetriebs der Fahrzeugbremsanlage statt. Als zusätzlicher Effekt ergibt sich durch die Erfindung ein vereinfachtes Druckstellen im Niederdruckbereich. Mit anderen Worten lassen sich durch die Erfmdung Bremsdrücke geringerer Höhe mit verbesserter Präzision als beim bekannten Stand der Technik einstellen und regeln.

Weitere Vorteile oder vorteilhafte Weiterbildungen der Erfmdung ergeben sich aus den Unteransprüchen und der nachfolgenden Beschreibung.

Vorteilhafterweise ist eine erfmdungsgemäße Druckspeichereinheit gemäß Anspruch 2 zwischen dem Umschaltventil zur Steuerung einer Druckmittelverbindung vom Hauptbremszylinder zu wenigstens einer Radbremse und einer Ventilanordnung zur Modulation des Bremsdrucks an dieser einen Radbremse eines Bremskreises geschaltet. Damit lassen sich Rückwirkungen auf das Bremspedal im Falle einer Aktivierung der Druckspeichereinheit vermeiden. Desweiteren ist eine Befüllung der Druckspeichereinheit mit Bremsflüssigkeit unabhängig von einer Druckbeaufschlagung der Radbremsen durch die Pumpeneinheit möglich.
In einer Ausbildungsvariante gemäß Anspruch 3 ist jeder Bremskreis einer Fahrzeugbremsanlage mit einer eigenen Druckspeichereinheit ausgerüstet, während in einer anderen Ausführungsvariante (Anspruch 4) eine Druckspeichereinheit für beide Bremskreise gemeinsam vorgesehen ist. Damit lässt sich für beide Bremskreise ein gemeinsamer Druckspeicher einsetzen, was die Anzahl an Bauteilen und den notwendigen Bauraum der Fahrzeugbremsanlage reduziert. Die damit verbundene hydraulische Verschaltung der Druckspeichereinheit erlaubt bei aktiviertem Motor der Pumpeneinheit und bei geöffneten Speichersteuerventilen, dass die Leistung der Pumpenelemente beider Bremskreise für einen Druckaufbau in nur einem der Bremskreise zur Verfügung steht. Dies reicht beispielsweise bei der Sonderfunktion "hydraulische Bremskraftverstärkung" aus, bei der eine Bremskraftverstärkung üblicherweise an nur einer der Fahrzeugachsen, nämlich der Vorderachse, notwendig ist, während die Hinterachse ohne eine solche Bremsdruckverstärkung ihr Blockierdruckniveau erreicht.
Anspruch 5 beansprucht eine dritte Ausführungsvariante mit einem dritten Speichersteuerventil. Dieses dritte Speichersteuerventil erlaubt es, den Druckspeicher bei geöffneter Verbindung zwischen den beiden Bremskreisen hydraulisch abzukoppeln. Damit stehen die Druckerzeuger beider Bremskreise wiederum für einen voll aktiven Bremsdruckaufbau in nur einem der beiden Bremskreise zur Verfügung, mit dem weiteren Vorteil einer gleichzeitigen Reduzierung unerwünschter Volumenelastizitäten innerhalb der Fahrzeugbremsanlage. Eine entsprechend aufgebaute Fahrzeugbremsanlage eignet sich daher auch für die Verwendung bei Leichtlastkraftwagen, die mit entsprechend voluminöseren hydraulischen Bremsanlagen ausgestattet sind und infolge dessen bereits größere Rad-/Volumenelastizitäten aufweisen.
Als Druckspeicher sind nach Anspruch 6 an sich bekannte und entsprechend preisgünstig darstellbare Kolben- oder Membranspeicher einsetzbar. Ein vorteilhafter Arbeitsbereich dieser Druckspeicher liegt im Bereich zwischen 5 und 10 bar maximaler Arbeitsdruck. Ihr maximaler Arbeitsdruck liegt demnach deutlich unterhalb des Maximaldrucks der Fahrzeugbremsanlage.
Gemäß Anspruch 7 umfasst eine erfindungsgemäße Druckspeichereinheit wenigstens ein 2/2-Wege-Umschaltventil als Speichersteuerventil. Derartige Ventile sind baugleich mit einzelnen Ventilen zur Modulation des Bremsdrucks, so dass diesbezüglich kein Entwicklungsmehraufwand entsteht.
Wie bereits eingangs erwähnt ist die Erfindung gemäß den Ansprüchen 8 und 9 sowohl in elektrohydraulischen Fahrzeugbremsanlagen einsetzbar, bei denen die Bremskraft allein durch Fremdkraft erzeugt ist, als auch in schlupfgeregelten Fahrzeugbremsanlagen, bei denen der Bremsdruck üblicherweise durch die Muskelkraft des Fahrers erzeugt und elektrohydraulisch moduliert ist. Bei diesen Fahrzeugbremsanlagen saugt die Pumpeneinheit dazu Druckmittel aus den Radbremsen ab.

### Zeichnung

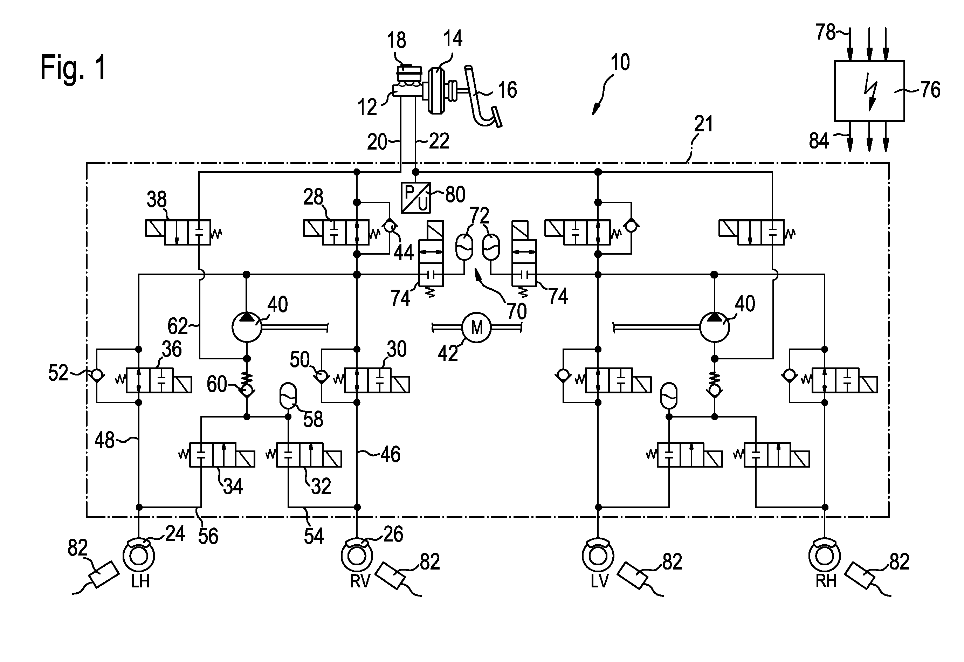

Ausführungsbeispiele der Erfindung sind in der Zeichnung dargestellt und in der nachfolgenden Beschreibung näher erläutert. Gezeigt sind in den Figuren 1 bis 3 Hydraulikschaltpläne von erfindungsgemäßen schlupfgeregelten elektrohydraulischen Fahrzeugbremsanlagen in verschiedenen Ausführungsvarianten. Die dargestellten Fahrzeugbremsanlagen sind im Wesentlichen identisch aufgebaut, so dass in der nachfolgenden Beschreibung lediglich das Ausführungsbeispiel 1 ausführlich erläutert ist und die Angaben zu den übrigen Ausführungsbeispielen auf das Aufzeigen der zum Ausführungsbeispiel 1 bestehenden Unterschiede beschränkt wurde. Einander entsprechend Bauteile in den verschiedenen Ausführungsbeispielen sind dementsprechend mit übereinstimmenden Bezugszeichen versehen.

### Beschreibung der Ausführungsbeispiele

Die in Figur 1 dargestellte Ausführungsvariante einer schlupfgeregelten elektrohydraulischen Fahrzeugbremsanlage 10 hat u.a. einen Hauptbremszylinder 12, der unter Zwischenschaltung eines Bremskraftverstärkers 14 vom Fahrer über ein Pedal 16 durch Muskelkraft betätigbar ist. An den Hauptbremszylinder 12 ist ein Druckmittelvorratsbehälter angeschlossen, der zwei voneinander getrennte Bremskreise 20, 22 mit Druckmittel versorgt. Beide Bremskreise 20, 22 sind symmetrisch aufgebraut, so dass nachfolgende Beschreibung auf den Bremskreis 20 beschränkt wurde, um Wiederholungen zu vermeiden. Dieser Bremskreis 20 dient zur Steuerung des Bremsdrucks an zwei Radbremsen 24, 26, die entsprechend ihrer Anordnung am Fahrzeug auch mit LH (links hinten) und mit RV (rechts vorne) bezeichnet sind. Somit liegt bei dieser Fahrzeugbremsanlage 10 exemplarisch eine Diagonalaufteilung der Bremskreise 20, 22 vor. Eine Parallelaufteilung, das heißt eine achsweise Zuordnung der beiden Bremskreise 20,22 wäre jedoch ebenso denkbar.

Zur Regelung des Bremsdrucks an den Radbremsen 24, 26 weist der Bremskreis 20 Elektromagnetventile 28 bis 38 und eine Pumpe 40 auf, die von einem ansteuerbaren Antriebsmotor 42 antreibbar ist. Die Elektromagnetventile 28 bis 38 und die Pumpe 40 sind in einer Hydraulikeinheit 21 zu einer Baugruppe zusammengefasst, an die der Hauptbremszylinder 12 und die Radbremsen 24, 26 über Bremsleitungen angeschlossen sind. Ein Umschaltventil 28 steuert eine Druckmittelverbindung zwischen dem Hauptbremszylinder 12 und der mit RV bezeichneten Radbremse 26. Bei diesem Umschaltventil 28 handelt es sich um ein 2/2-Wege-Schaltventil, das in seinem nicht angesteuerten Zustand von einer Rückstellfeder in seiner normal offenen Grundstellung gehalten ist und das durch elektrische Ansteuerung in seine Sperrstellung umschaltbar ist. Diesem 2/2-Wege-Schaltventil ist ein Rückschlagventil 44 parallel geschaltet, das in Richtung vom Hauptbremszylinder 12 zur Radbremse RV öffnet und die Gegenrichtung sperrt. Ein Rückströmen von Druckmittel von der Radbremse 26 zum Hauptbremszylinder 12 ist damit bei gesperrtem Umschaltventil 28 ausgeschlossen.

Stromabwärts des Umschaltventils 28 ist eine Ventileinrichtung vorhanden, mit der eine Modulation des Bremsdrucks an der Radbremse 26 durchgeführt wird. Diese Ventileinrichtung umfasst zwei, in parallelen Bremskreiszweigen 46, 48 platzierte, normal offene 2/2-Wege-Schaltventile, die im Folgenden als Druckaufbauventile 30, 36 bezeichnet sind, weil über sie in den beiden Radbremsen 24, 26 ein Bremsdruckaufbau bewirkt wird. Den Druckaufbauventilen 30, 36 sind ventilfederlose Rückschlagventile 50, 52 parallel geschaltet. Diese öffnen sobald das Druckniveau stromabwärts des Druckaufbauventils 30, 36 höher ist als stromabwärts und ermöglichen damit einen schnellen Druckabbau in den Radbremsen 24, 26.

In einer Rücklaufleitung 54, 56 sind darüber hinaus zwei den Radbremsen 24, 26 hydraulisch nachgeordnete Druckabsenkventile 32, 34 vorhanden. Dabei handelt es sich um normal geschlossene 2/2-Wege-Schaltventile, die im Falle ihrer elektrischen Ansteuerung entgegen einer Rückstellfeder in eine Durchlassstellung umschaltbar sind. Wie ihr Name sagt, dienen diese Druckabsenkventile 32, 34 zum Abbau des Bremsdrucks in den Radbremsen 24, 26. Stromabwärts dieser Druckabsenkventile 32, 34 ist für beide Bremskreiszweige 46, 48 ein gemeinsamer Niederdruckspeicher 58 vorhanden, in dem von den Radbremsen 24, 26 abströmendes Druckmittel zunächst speicherbar ist. Der Niederdruckspeicher 58 ist an die Saugseite der Pumpe 40 angeschlossen, und verbessert durch die Bereitstellung von Druckmittel deren Anlaufverhalten. Ein Pumpenantrieb erfolgt durch einen extern ansteuerbaren Antriebsmotor 42. Eine Hochdruckseite der Pumpe 40 ist zwischen dem Umschaltventil 28 und dem Druckaufbauventil 30, 36 an die Bremsleitungszweige 46, 48 angeschlossen und speist aus den Radbremsen 24, 26 abgesaugtes Druckmittel wieder ein. Die Saugseite der Pumpe 40 ist von einem federbetätigten Rückschlagventil 60 abgesichert, welches verhindert, dass bereits in der Pumpe 40 befmdliches Druckmittel bei einer Zurücknahme des Pumpenantriebs zurück zu den Radbremsen 24, 26 strömt.

Stromaufwärts des Rückschlagventils 60 ist ein Ansaugkanal 62 an die Saugseite der Pumpe 40 angeschlossen. Dieser Ansaugkanal 62 ist mit dem Hauptbremszylinder 12 verbunden und durch ein Ansaugventil 38 gesteuert. Dieses befindet sich in seinem nicht angesteuerten Zustand in der Sperrstellung und ist entgegen der Kraft einer Rückstellung in eine Durchlassstellung umschaltbar. Während dieser Durchlassstellung ist die Pumpe 40 in der Lage, Druckmittel aus dem Hauptbremszylinder 12 bzw. dem Vorratsbehälter 18 anzusaugen und zu den Radbremsen 24, 26 zu fördern.

Erfindungsgemäß weist diese Fahrzeugbremsanlage 10 eine Druckspeichereinheit 70 auf, die gemeinsam mit der Hochdruckseite der Pumpe 40 im Bereich der Druckmittelverbindung vom Umschaltventil 28 zum Druckaufbauventil 30 an die beiden Bremskreiszweige 46, 48 angeschlossen ist. Die Druckspeichereinheit 70 umfasst einen Druckmittelspeicher 72 und ein in Beladungsrichtung des Druckmittelspeichers 72 hydraulisch vorgeschaltetes Speichersteuerventil 74. Dieses ist normalerweise geschlossen und kann durch elektrische Ansteuerung entgegen der Kraft einer Rückstellfeder in seine Durchlassstellung umgeschaltet werden. Durch Öffnen des Speichersteuerventils 74 ist der Druckmittelspeicher 72 somit mit der Hochdruckseite der Pumpe 40 verbindbar und kann mit Druckmittel beladen werden, bzw. kann bei nicht betätigter Pumpe 40 und geöffnetem Druckaufbauventil 30, 36 die Radbremsen 24, 26 mit dem gespeicherten Druckniveau beaufschlagen. Als Druckmittelspeicher 72 können an sich bekannte Kolben- oder Membranspeicher eingesetzt werden, deren Kolben preisgünstig aus Kunststoff oder aus Metall bestehen kann. Ein den Kolben bzw. die Membran beaufschlagendes Rückstellelement ist dabei derart ausgelegt, dass der maximale Arbeitsdruck der Druckmittelspeichers 72 im Bereich zwischen 5 bis 10 bar, also deutlich unterhalb des Maximaldrucks der erläuterten Fahrzeugbremsanlage 10, liegt. Dementsprechend handelt es sich bei der erfindungsgemäßen Druckspeichereinheit 70 um einen Niederdruckspeicher. Bei der erläuterten ersten Ausführungsvariante der Fahrzeugbremsanlage 10 weist jeder Bremskreis 20, 22 eine eigene Druckspeichereinheit 70 mit jeweils einem Druckmittelspeicher 72 und einem vorgeschalteten Speichersteuerventil 74 auf.

Zur elektrischen Ansteuerung der erläuterten Elektromagnetventile 28 - 38 sowie des Antriebsmotors 42 der Pumpe 40 ist ein elektronisches Steuergerät 76 vorhanden. Dieses wertet Eingangssignale 78 aus, welche Aufschluss über die Bremssituation, den Fahrzustand und insbesondere über die an den Rädern vorhandenen Schlupfverhältnisse liefern. Die Eingangssignale 78 werden von Sensoren erfasst. Exemplarisch weist die dargestellte Fahrzeugbremsanlage 10 dazu einen Drucksensor 80 auf, welcher den Druck am Hauptbremszylinder 12 stellvertretend für beide Bremskreise im Bremskreis 22 erfasst und dem Steuergerät 76 weitermeldet. Ferner liefern Raddrehzahlsensoren 82 Signale, die ein Blockieren eines der Fahrzeugräder erkennen lassen. Die aus den Eingangssignalen 78 abgeleiteten Ausgangssignalen 84 sind unter der Maßgabe ermittelt, dass kein Radschlupf an den Fahrzeugrädern auftritt. Dabei sind verschiedene Betriebszustände der Fahrzeugbremsanlage 10 zu unterscheiden. Beim Antiblockierschutzbetrieb wird während eines Bremsvorgangs das Blockieren eines Rades vermieden, um die Lenkbarkeit des Fahrzeugs aufrecht zu erhalten. Während eines Antriebsschlupfregelbetriebs wird das Durchdrehen eines angetriebenen Rades verhindert und im Fahrstabilitätsregelbetrieb wird einem drohenden Ausbrechen des Fahrzeugs durch gezielte Abbremsung von Fahrzeugrädern entgegengewirkt.

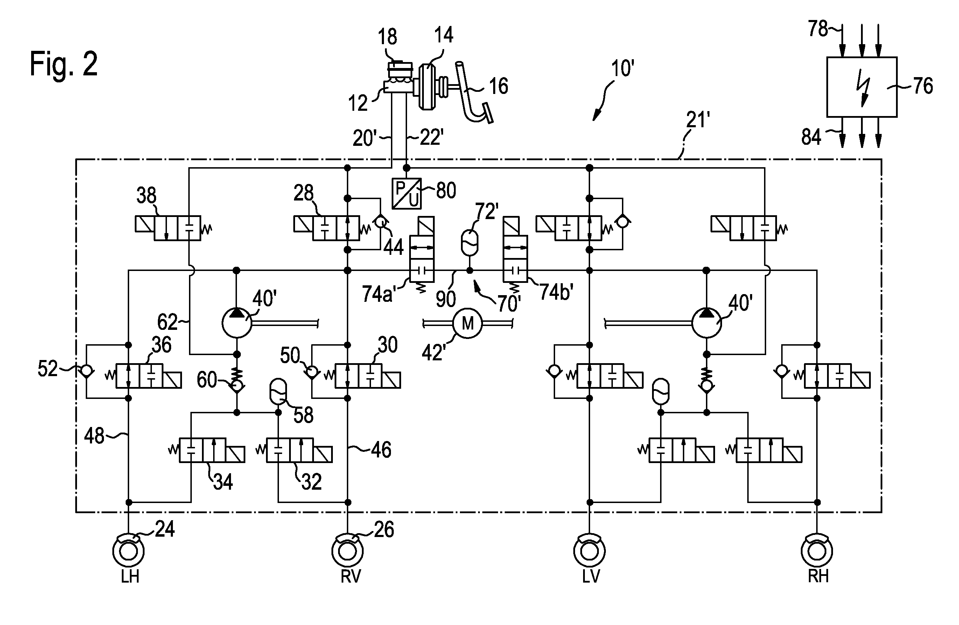

Eine in Figur 2 gezeigte zweite Ausführungsvariante einer erfindungsgemäßen schlupfgeregelten elektrohydraulischen Fahrzeugbremsanlage 10' unterscheidet sich von der beschriebenen ersten Ausführungsvariante durch eine geänderte Ausbildung der Drucksteuereinheit 70'. Diese besteht nunmehr aus einem einzigen Druckmittelspeicher 72' für beide Bremskreise 20', 22'. Der Druckmittelspeicher 72' ist zwischen zwei Speichersteuerventilen 74a' und 74b' an eine Druckmittelleitung 90' angeschlossen, welche die beiden Bremskreise 20' und 22' der Fahrzeugbremsanlage 10' miteinander verbindet. Beide Speichersteuerventile 74a',74b' nehmen in ihrer dargestellten Grundstellung eine Sperrposition ein.

Neben einer Einsparung von Einzelbauteilen und Bauraum gegenüber der ersten Ausführungsvariante nach Figur 1 eröffnet diese Anordnung die Möglichkeit, bei aktiviertem Antriebsmotor 42' und bei elektrisch angesteuerten Speichersteuerventilen 74a',74b' die Gesamtleistung der Pumpen 40' beider Bremskreise 20'und 22' für einen Druckaufbau in nur einem dieser Bremskreise 20' oder 22' einzusetzen. Dies ist für bestimmt Funktionen der Fahrzeugbremsanlage 10', bspw. einer hydraulischen Bremskraftverstärkung, ausreichend. Bei einer hydraulischen Bremskraftverstärkung wird ein vom Fahrer aufgebrachter Bremsdruck verstärkt. Es wird deshalb von einem teilaktiven Bremsdruckaufbau gesprochen. Üblicherweise ist eine solche Verstärkung nur an den der Vorderachse zugeordneten Radbremsen eine Fahrzeugs notwendig, um dort das Blockierdruckniveau zu erreichen. Die Radbremsen einer beim Bremsen entlasteten Hinterachse erreichen ihr Blockierdruckniveau auch ohne Druckverstärkung. Um einen Druckaufbau wie beschrieben nur an der Vorderachse eines Fahrzeugs vornehmen zu können ist jedoch eine entsprechende Aufteilung der Bremskreise 20', 22' erforderlich. Dies bedeutet, dass entgegen dem dargestellten Ausführungsbeispiel 1 anstelle einer Diagonalaufteilung, wie erläutert, eine Parallelaufteilung der Bremskreise 20' und 22' Grundvoraussetzung ist.

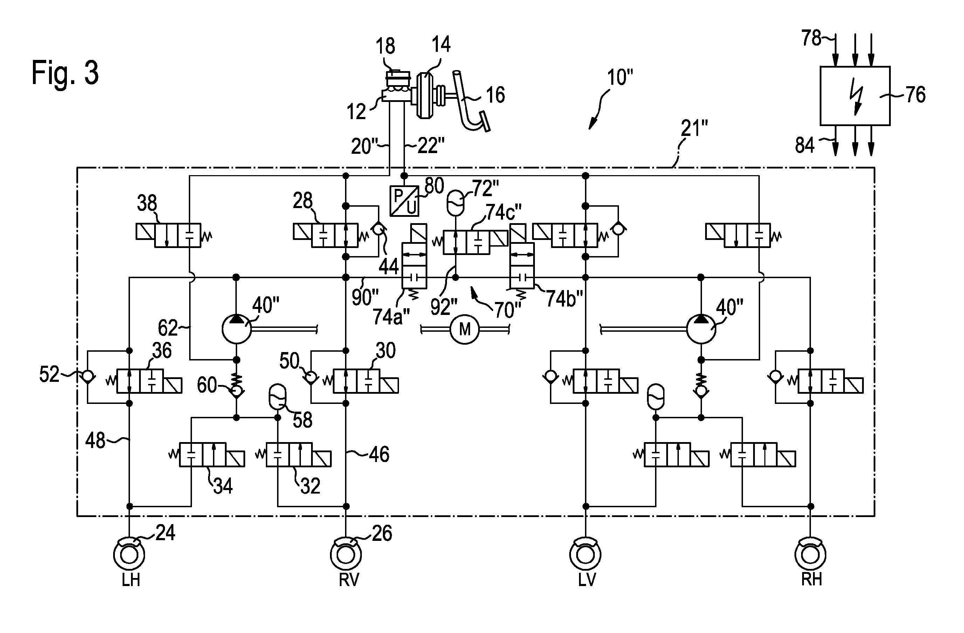

Ausführungsvariante 3 nach Figur 3 beschreibt eine Druckspeichereinheit 70" aus einem Druckspeicher 72" in Wirkverbindung mit insgesamt drei Speicherventilen 74a", 74b", 74c". Vergleichbar zu Ausführungsvariante 2 ist diese Druckspeichereinheit 70" ebenfalls in einer Druckmittelleitung 90" angeordnet, welche die beiden Bremskreise 20" und 22" einer Fahrzeugbremsanlage 10" miteinander verbindet. Der wesentliche Unterschied besteht darin, dass der Druckspeicher 72" sich in einem hydraulischen Abzweig 92" zur Druckmittelleitung 90" befmdet, wobei dieser Abzweig 92" mittels eines dritten Speichersteuerventils 74c" von dieser Druckmittelleitung 90" abkoppelbar ist. Damit lässt sich eine vom Druckspeicher 72" eingebrachte Volumenelastizität vermeiden, wenn durch Ansteuerung der beiden Speichersteuerventile 74a"und 74b" eine Druckmittelverbindung zwischen den Bremskreisen 20" und 22" hergestellt wird. Diese dritte Ausführungsvariante einer Fahrzeugbremsanlage 10" verbessert dadurch die Dynamik im Falle eines voll aktiven Druckaufbaus weiter. In einem ersten Schritt wird dazu der Druckspeicher 72" bei geöffneten Speichersteuerventilen 74a", 74b" und 74c" von den Pumpen 40"und 40" mit Druckmittel beladen. Danach wird das den Druckmittelspeicher 72" vorgeschaltete dritte Speichersteuerventil 74c" geschlossen und der erreichte Speicherdruck eingesperrt. Durch ein Offenhalten des ersten und des zweiten Speichersteuerventils 74a",74b" kann die Leistung beider Pumpen 40" wiederum zum Druckaufbau in nur einem der Bremskreise 20" oder 22" herangezogen werden, wie dies in Verbindung mit Ausführungsbeispiel 2 bereits erläutert wurde. Mit der dritten Ausführungsvariante einer Fahrzeugbremsanlage 10" können Bremsfunktionen mit vollaktivem Druckaufbau an den Radbremsen des Fahrzeugs mit deutlich verbesserter Dynamik und Regelgüte bzw. für Fahrzeuge mit hohen Radelastizitäten, wie bspw. bei so genannten Leichtlastkraftwagen, überhaupt erst realisiert werden.

Bei allen beschriebenen Ausführungsvarianten 1 bis 3 wird durch die erfindungsgemäßen Druckspeichereinheiten 70, 70', 70" ein vereinfachtes Druckstellen im Niederdruckbereich ermöglicht. Bestimmte Bremsfunktionen, wie bspw. ein Anlegen der Bremsbeläge an die rotierenden Bremskörper einer Radbremse 24, 26, um eventuell vorhandene Feuchtigkeit zu beseitigen (sog. Bremsscheibenwischerfunktion), ohne dass die Fahrzeuginsassen eine Fahrzeugverzögerung wahrnehmen können, erfolgt allein durch den Aufbau des notwendigen Bremsdrucks mittels Ansteuerung der auf einen maximalen Arbeitsdruck zwischen 5 und 10 bar gebrachten Druckspeichereinheit 70, 70', 70". Es ist davon auszugehen, dass sich dann aufgrund des geringen Druckunterschieds zwischen dem Druck im Druckspeicher 72, 72', 72" und dem Solldruck an der Radbremse 24, 26 der tatsächliche Radbremsdruck durch die Druckaufbau- und Druckabsenkventile 30, 36 und 32, 34 wesentlich exakter regeln lässt, als wenn der Druckaufbau durch die Pumpen 40, 40',40 "oder einen den Pumpen nachgeschalteten Hochdruckspeicher stattfindet.

Selbstverständlich sind Änderungen oder vorteilhafte Weiterbildungen an den beschriebenen Ausführungsbeispielen möglich, ohne von diesem Grundgedanken der Erfindung abzuweichen.

## Patentansprüche

1. Schlupfgeregelte elektrohydraulische Fahrzeugbremsanlage (10, 10', 10") mit einem muskelkraftbetätigbaren Hauptbremszylinder (12), einer an den Hauptbremszylinder (12) angeschlossenen Hydraulikeinheit (21) und mit Radbremsen (24, 26) die von einem durch die Hydraulikeinheit (21) regelbaren Bremsdruck beaufschlagbar sind, wobei die Hydraulikeinheit (21) ein von einem elektronischen Steuergerät (76) ansteuerbares Umschaltventil (28) zur Steuerung einer Druckmittelverbindung zwischen dem Hauptbremszylinder (12) und den Radbremsen (24, 26), eine Ventilanordnung (30 - 36) zur Modulation des Bremsdrucks an den Radbremsen (24, 26) und eine von einem ansteuerbaren Antriebsmotor (42) angetriebene Pumpeneinheit (40, 40', 40") aufweist, deren Saugseite über ein ansteuerbares Ansaugventil (38) mit dem Hauptbremszylinder (12) verbindbar ist, **gekennzeichnet durch** eine Druckspeichereinheit (70, 70', 70") aus wenigstens einem Druckspeicher (72, 72', 72") und wenigstens einem in Beladungsrichtung des Druckspeichers (72, 72', 72") hydraulisch vorgeschalteten, elektronisch ansteuerbaren Speichersteuerventil (74; 74a', 74b'; 74a", 74b", 74c"), wobei die Druckspeichereinheit (70, 70', 70") zwischen einer Hochdruckseite der Pumpeneinheit (40, 40', 40") und wenigstens einer der Radbremsen (24, 26) an die Fahrzeugbremsanlage (10, 10', 10") angeschlossen ist.

2. Schlupfgeregelte elektrohydraulische Fahrzeugsbremsanlage nach Anspruch 1, **dadurch gekennzeichnet, dass** die Druckspeichereinheit (70, 70', 70") zwischen dem Umschaltventil (28) und der Ventilanordnung (30 - 36) zur Modulation des Bremsdrucks an die Radbremse (24, 26) angeschlossen ist.

3. Schlupfgeregelte elektrohydraulische Fahrzeugsbremsanlage nach Anspruch 1 oder 2, **dadurch gekennzeichnet, dass** die Fahrzeugbremsanlage (10, 10', 10") mehrere hydraulisch voneinander getrennte Bremskreise (20, 22, 20', 22', 20", 22") aufweist, wobei jeder Bremskreis (20, 22) eine Druckspeichereinheit (70, 70', 70") aufweist.

4. Schlupfgeregelte elektrohydraulische Fahrzeugsbremsanlage nach Anspruch 1 oder 2, **dadurch gekennzeichnet, dass** die Fahrzeugbremsanlage (10') zwei Bremskreise (20', 22') aufweist, die durch eine Druckmittelleitung (90') miteinander verbunden sind und dass in dieser Druckmittelleitung (90') eine Druckspeichereinheit (70') aus zwei Speichersteuerventilen (74a'und 74b') und einem Druckspeicher (72') angeordnet ist, wobei der Druckspeicher (72') zwischen den beiden Speichersteuerventilen (74a', 74b') an die Druckmittelleitung (90') angeschlossen ist.

5. Schlupfgeregelte elektrohydraulische Fahrzeugsbremsanlage nach Anspruch 4, **dadurch gekennzeichnet, dass** der Druckspeicher (72 ") in einem Abzweig (92 ") zu der die beiden Bremskreisen (20", 22") verbindenden Druckmittelleitung (90 ") angeordnet ist und dass dieser Abzweig (92 ") mittels eines dritten Speichersteuerventil (74c") von der Druckmittelleitung (90") hydraulisch abkoppelbar ist.

6. Schlupfgeregelte elektrohydraulische Fahrzeugsbremsanlage einem der Ansprüche 1 bis 5, **dadurch gekennzeichnet, dass** als Druckspeicher (72, 72', 72") ein Kolbenspeicher oder ein Membranspeicher eingesetzt ist, dessen maximaler Speicherdruck im Bereich zwischen 5 und 10 bar liegt.

7. Schlupfgeregelte elektrohydraulische Fahrzeugsbremsanlage nach einem der Ansprüche 1 bis 6, **dadurch gekennzeichnet, dass** als Speichersteuerventile (74; 74a',74b'; 74a", 74b", 74c") elektromagnetisch entgegen der Kraft eines Rückstellelements ansteuerbare 2/2-Wege-Umschaltventile eingesetzt sind.

8. Schlupfgeregelte elektrohydraulische Fahrzeugsbremsanlage nach einem der Ansprüche 1 bis 7, **dadurch gekennzeichnet, dass** die Fahrzeugbremsanlage (10, 10', 10") eine fremdkraftbetätigbare Betriebsbremse und eine muskelkraftbetätigbare Hilfsbremse aufweist.

9. Schlupfgeregelte elektrohydraulische Fahrzeugsbremsanlage nach einem der Ansprüche 1 bis 7, **dadurch gekennzeichnet, dass** die Pumpeneinheit (40, 40', 40") mit ihrer Saugseite wenigstens mittelbar mit einer der Radbremsen (24, 26) der Fahrzeugbremsanlage (10, 10', 10") verbunden ist.
